# EUROPÄISCHE PATENTSCHRIFT

(11) **EP 0 601 257 B1**
(45) Veröffentlichungstag und Bekanntmachung des Hinweises auf die Patenterteilung: **29.01.1997**
(21) Anmeldenummer: 92810942.0
(22) Anmeldetag: 02.12.1992
(51) Int. Cl.: B01J 19/32, B01D 3/32

(54) **Kranzelement zu der Packung einer Stoffaustauschkolonne**
Rim element for the packing of a mass exchange column
Elément de jante pour un garnissage d'une colonne d'échange de matière

(43) Veröffentlichungstag der Anmeldung: 15.06.1994
(73) Patentinhaber: Sulzer Chemtech AG, CH-8404 Winterthur (CH)
(72) Erfinder: Plüss, Raymond, Charles, CH-8451 Kleinandelfingen (CH); Süess, Philipp, CH-8413 Neftenbach (CH)
(74) Vertreter: Hammer, Bruno, Dr.

(56) Entgegenhaltungen:
- EP-A- 0 491 591
- DE-U- 8 700 639
- FR-A- 2 637 059

## Beschreibung

Die Erfindung betrifft ein stoffleitendes Kranzelement zu der Packung einer Stoffaustauschkolonne gemäss dem Oberbegriff von Anspruch 1. Die Erfindung betrifft auch eine Stoffaustauschkolonne mit derartigen Kranzelementen. Der Austauschteil einer solchen Kolonne, in der insbesondere ein aufwärts strömendes Gas (Dampf) und eine im Gegenstrom fliessende Flüssigkeit in Kontakt gebracht werden, besteht aus einer Packung, die den Querschnitt der Kolonne bis auf einen Ringspalt bei der Kolonnenwand ausfüllt. Die Kranzelementen, welche die Packung umgürten, dienen zur Lenkung dieser Stoffströme. Mit den Kranzelementen wird der Gasstrom in die Packung gezwungen; das Gas wird daran gehindert, teilweise im Randbereich die Kolonne zu durchströmen, ohne mit der Flüssigkeit in Kontakt zu treten. Die Packung ist insbesondere eine geordnete Packung, die eine Verteilung der beiden Stoffströme über den Kolonnenquerschnitt bewirkt.

Die Packung setzt sich beispielsweise aus Schichten von wellenförmigen oder zickzackartig gefalteten Lamellen zusammen. Die Lamellen bestehen aus einem folienartigen Material; die Faltkanten oder Kämme weisen eine gegen die Kolonnenachse geneigte Richtung auf, wobei der mit der Achse eingeschlossene Winkel beispielsweise 45° oder 30° beträgt. Die durch die Lamellen gebildeten Schichten sind parallel zur Achse ausgerichtet; sie sind bezüglich der Neigung der Faltkanten wechselweise angeordnet, sodass sich schräg laufende, offene und sich kreuzende Kanäle ergeben. Die Packung gliedert sich in Abschnitte, die sich durch die Orientierung der Schichtung unterscheiden. Die Orientierung wechselt zwischen benachbarten Abschnitten jeweils um 90°.

Durch die schräg laufenden Kanäle der Packung fliesst ein Teil der Flüssigkeit in den Randbereich. Damit diese Flüssigkeit nicht in Kontakt mit der Kolonnenwand tritt, ist ein Randspalt, nämlich der oben genannte Ringspalt, vorgesehen. Ohne den Randspalt würde ein beträchtlicher Teil der Flüssigkeit entlang der Kolonnenwand abwärts fliessen. Mittels des Randspalts wird es möglich, dass die am Packungsrand ankommende Flüssigkeit durch andere Kanäle wieder in das Packungsinnere zurückgeführt wird. In der Praxis lässt sich allerdings nicht vermeiden, dass doch ein gewisser Teil der Flüssigkeit auf die Kolonnenwand übertritt und dadurch den Stoffaustauschprozess beeinträchtigt. Die Kranzelemente haben die zusätzliche Funktion, die Flüssigkeit von der Kolonnenwand zurück zur Packung zu leiten, wo die Flüssigkeit anschliessend durch die einen der Kanäle wieder in das Packungsinnere geführt wird.

Weitere Beispiele von geordneten Packungen, die eine Verteilung der beiden Stoffströme über den Kolonnenquerschnitt bewirken, sind in den europäischen Patentschriften EP-A-0 070 917 und EP-A-0 069 241 beschrieben.

Aus der US-A-4 186 159 oder CH-A-618 006 ist ein Kranzelement zu einer Pakung bekannt, das dort mit "Kragen" bezeichnet ist. Die Beschreibung der dort abgebildeten Fig.8 lautet wie folgt (Zitat): An den unteren Teilen der Einbauelementen (hier Packungsabschnitte genannt) sind als Kragen ausgebildete Ableitelemente befestigt, die den Ringspalt zwischen Packungskörper und Kolonnenwand abdichten und die bewirken, dass an der Innenwand abfliessende Flüssigkeit an der Unterseite jedes Einbauelements nach innen geleitet wird. Solche Krägen können auch auf verschiedener Höhe der Einbauelemente angeordnet sein.

Ein einzelner Packungsabschnitt der Stoffaustauschkolonne kann aus einem zusammenhängenden Einbauelement bestehen; er kann - insbesondere bei grossem Kolonnendurchmesser - auch aus mehreren Segmenten zusammengesetzt sein. Für eine einfache Montage der Kolonne ist es notwendig, dass die Krägen bereits vor dem Einbau der Packung auf den Einbauelementen bzw. Segmenten befestigt werden. Da die Packung aus dünnwandigem Material besteht, ist die Befestigung der Krägen, die insbesondere durch Schweissen (aber auch durch Schrauben oder Nieten) ausgeführt wird, ein kostenaufwendiger Fertigungsschritt. Es ist Aufgabe der Erfindung, bezüglich dem Einbau von Krägen eine kostengünstigerer Lösung zu finden. Diese Aufgabe wird mit Kranzelementen gelöst, welche die Funktion von Krägen haben und welche die kennzeichnenden Merkmale des Anspruchs 1 aufweisen. Mit der Erfindung lässt sich die Kolonne kostengünstig mit Kragenelementen ausstatten.

Die abhängigen Ansprüche 2 bis 7 beziehen sich auf vorteilhafte Ausführungsformen des erfindungsgemässen Kranzelements. Die übrigen Ansprüche betreffen die Stoffaustauschkolonne, die auch Gegenstand der Erfindung ist.

Nachfolgend wird die Erfindung anhand der Zeichnungen näher erläutert. Es zeigen:
- Fig. 1: einen Ausschnitt aus einem Kolonnenquerschnitt mit einem Teil eines Packungssegments,
- Fig. 2: einen Ausschnitt aus einer Packung in perspektivischer Ansicht,
- Fig. 3: einen Teil eines bekannten, von der Packung abgetrennten Kragens,
- Fig. 4: entsprechend zu Fig.3, ein erstes Ausführungsbeispiel des erfindungsgemässen Kranzelements,
- Fig.5-7: weitere Ausführungsbeispiele,
- Fig.8a-d: Querschnittsprofile der Kranzelemente, die in den Figuren 4 -7 dargestellt sind und
- Fig.8e-f: Querschnittsprofile von weiteren erfindungsgemässen Kranzelementen.

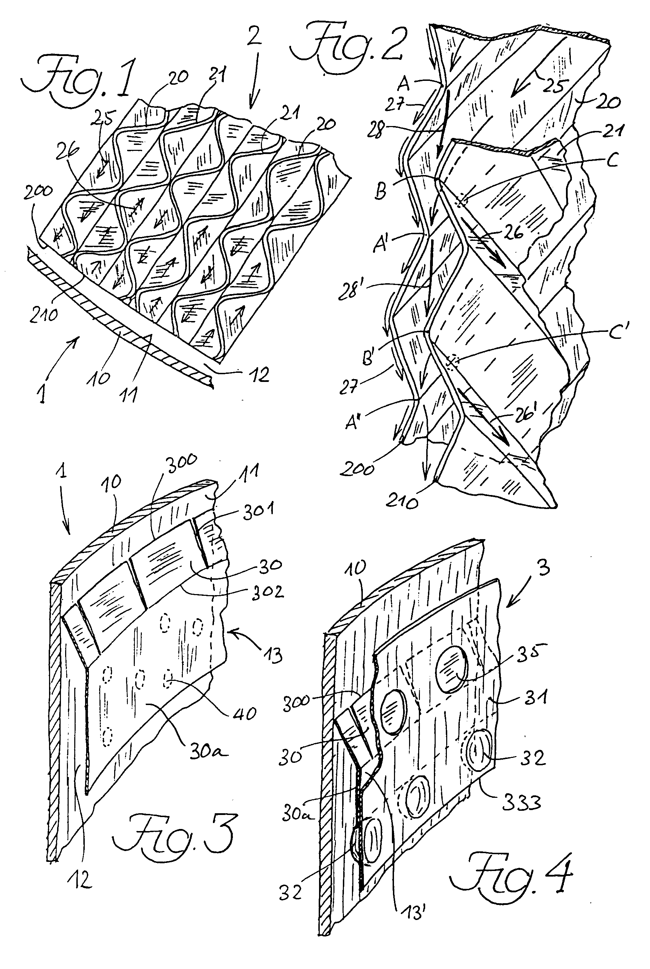

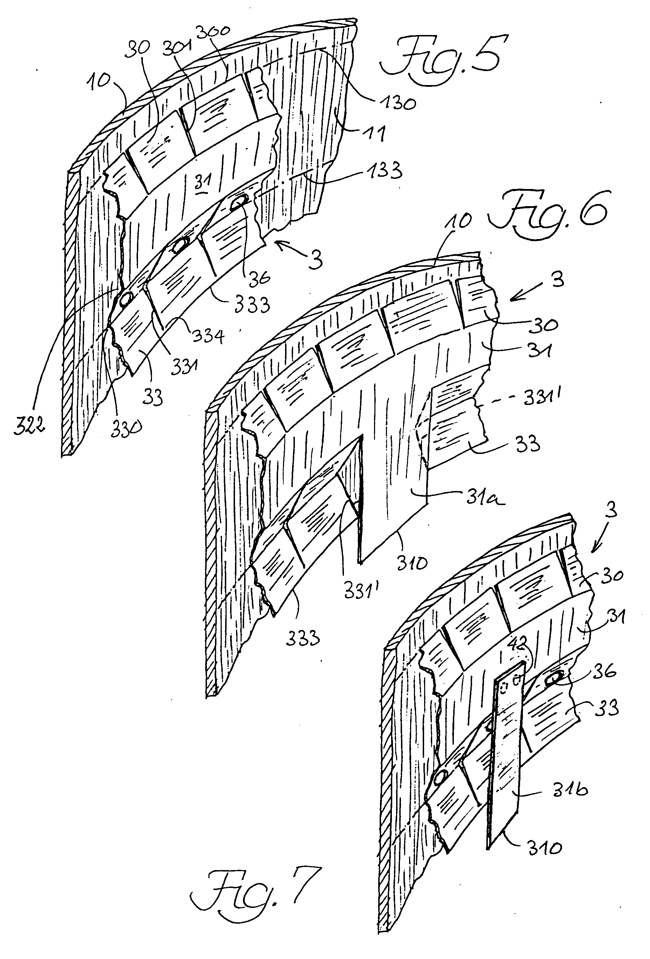

Fig.1 zeigt einen Teil des Ring- oder Randspalts 12, der zwischen der Wand 10 der Stoffaustauschkolonne 1 und der Packung 2 liegt. Die Schichten der Packung 2, die aus zickzackartig gefalteten Lamellen 20 und 21 zusammengesetzt ist, leiten die Flüssigkeit gemäss den Pfeilen 25 vom Packungsinneren zum Rand, der durch die Lamellenkanten 200 und 210 gebildet wird, beziehungsweise in die umgekehrte Richtung gemäss den Pfeilen 26. Die Verhältnisse am Packungsrand werden durch die Fig.2 veranschaulicht. Die ausschnittsweise dargestellten Lamellen 20 und 21, die sich an den Punkten C und C' berühren, werden von einem Flüssigkeitsfilm überrieselt. Durch die auf der Lamelle 20 nach aussen geleitete Flüssigkeit (Pfeil 25) bildet sich an der Kante 200 ein verstärkter Flüssigkeitsstrom aus, der durch die Pfeile 27 angedeutet ist. An den Vorsprüngen A, A', A'' kann ein Teil dieses Stroms 27 auf die Kante 210 der benachbarten Lamelle 21 - zu den Punkten B, B' - überwechseln (Pfeile 28, 28'), wo anschliessend die Flüssigkeit wieder in das Packungsinnere geleitet wird (Pfeile 26, 26'). Bestände eine Berührung zwischen Packung 2 und Kolonnenwand 10, so hätte die an den Rand geleitete Flüssigkeit die Tendenz, an der Innenwand 11 weiter zu fliessen.

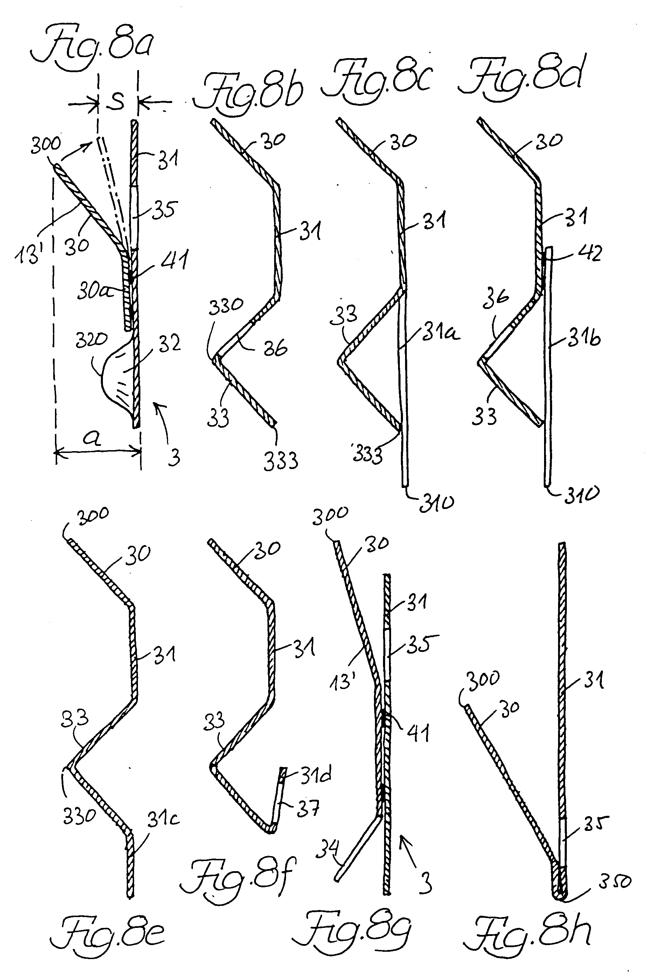

Es ist bereits eingangs darauf hingewiesen worden, dass bezüglich dem Gasstrom Hindernisse im Randspalt vorzusehen sind. Solche Hindernisse werden in Form von Krägen, die auf dem Packungsrand befestigt sind, hergestellt. In Fig.3 ist in perspektivischer Ansicht und ausschnittsweise ein bekannter Kragen 13 zu sehen, der von der Packung abgetrennt - aber trotzdem an seiner Einsatzstelle bei der Kolonnenwand 10 angeordnet - dargestellt ist. Die durchtrennten Verbindungsstellen 40 sind durch gestrichelt gezeichnete Kreise angedeutet. Der Kragen 13 lässt sich sehr einfach aus einem folienartigen Band durch seitliches Einschneiden herstellen, sodass zwischen den Einschnitten 301 lappenförmige Teile 30 entstehen, mit welchen durch Falten um die Linie 302 eine weitgehende Überdachung des Randspalts 12 ermöglicht wird. Über den nicht eingeschnittenen Teil 30a des folienartigen Bandes wird - bei bekannten Kolonnen - der Kragen 13 mit der Packung verschweisst (auch angeschraubt oder angenietet). Die Flüssigkeit, die auf die Kolonnenwand gerät, wird durch die überdachenden Teile 30, die an den äusseren Kanten 300 mit der Wand 10 in Berührung stehen, wieder zur Packung zurückgeleitet.

Im Unterschied zu den bekannten Krägen 13 ist das erfindungsgemässe Kranzelement 3 ein separates Bauteil, das nicht am Packungsrand befestigt ist und das nur aufgrund von Feder- und Reibkräften im Randspalt 12 zwischen Kolonnenwand 10 und Packung 2 festgehalten wird. Vier Ausführungsbeispiele des Kranzelements 3 sind in den Figuren 4 - 7 (perspektivische Ansichten) und in den Figuren 8a - 8d (entsprechende Querschnittsprofile) dargestellt.

Beim ersten Ausführungsbeispiel, Fig.4, ist das erfindungsgemässe Kranzelement 3 aus zwei Teilen zusammengesetzt, nämlich einem Teil 13' und einem Teil 31. Der Teil 13' hat im wesentlichen die gleiche Form wie der bekannte Kragen 13. Der Teil 31 ist ein folienartiges Bandstück, das noppenartige Erhebungen 32 und Durchbrüche 35 aufweist. Die Durchbrüche 35 dienen der Flüssigkeit, die durch die überdachenden Teile 30 von der Kolonnenwand 10 weggeleitet wird, als Durchtrittsstellen zur Packung. Da die Kraftübertragung durch die Teile 30 zwischen Kolonnenwand 10 und Kranzelement 3 im oberen Bereich des Kranzelements 3 erfolgt, bildet sich ein Kippmoment aus, das dazu führen könnte, dass die Packung durch den Teil 31 in dessen unteren Bereich nicht berührt wird; dadurch würde der Rücktransport der Flüssigkeit zur Packung beeinträchtigt. Mit den noppenartigen Erhebungen 32 lässt sich erreichen, dass die untere Kante 333 des Kranzelements 3 nicht in Berührung mit der Wand 10 gerät, womit verhindert ist, dass keine Flüssigkeit von dieser Kante 333 zur Wand fliesst und stattdessen die abtropfende Flüssigkeit wieder in die Packung übertreten kann. Im Gegensatz zum bekannten Kragen 13 müssen beim Erfindungsgegenstand die überdachenden Teile 30 mit den übrigen Teilen des Kranzelements 3 federelastisch verbunden sein und zwar derart, dass sich das Kranzelement 3 im Randspalt 12 in einem gespannten Zustand befindet, durch den es in seiner Lage fixiert wird.

Beim zweiten Ausführungsbeispiel, Fig.5, besteht das erfindungsgemässe Kranzelement 3 nur aus einem Teil. Die Kraftübertragung auf die Kolonnenwand 10 erfolgt auf den Linien 130 und 133 der Innenwand 11 einerseits über die Kanten 300 der überdachenden Teile 30 und andererseits über die Faltkanten 330. Diese Kanten 330 werden durch Faltteile 33 im unteren Bereich des Kranzelements 3 gebildet, welche als Grenzen oben eine Faltlinie 332 und seitlich Einschnitte 331 aufweisen. Man beachte, dass die Einschnitte 331 nicht bis zur untern Kante 333 durchgehen, sondern dass dort ein kleines, undurchschnittenes Stück 334 vorgesehen ist. Es ist auch möglich - allerdings auf Kosten der Stabilität des Kranzelements 3 - diese Einschnitte 331 bis zur Kante 333 laufen zu lassen. Durch die keilförmigen Öffnungen bei den Einschnitten 301 zwischen den überdachenden Teilen 30 kann Flüssigkeit durchtreten; diese Flüssigkeit wird durch die Faltkante 330 aufgefangen und durch die Durchbrüche 36 zur Packung geleitet. Zwischen den überdachenden Teilen 30 und den Faltteilen 33 liegt der packungsberührende Bereich 31, über den mindestens ein Teil der Kraftübertragung zwischen Kranzelement 3 und Packung erfolgt. (Ein zweiter Teil der Kraftübertragung kann über die Kante 333 erfolgen).

Die Montage der Packung wird Abschnitt für Abschnitt durchgeführt. Dabei werden beispielsweise jeweils auf den zuvor eingebauten Packungsabschnitt zunächst die Kranzelemente 3 über den Umfang des Kolonnenquerschnitts verteilt. In den Ring der Kranzelemente 3 wird anschliessend der folgende Packungsabschnitt eingeschoben (in einem Stück oder segmentweise), wobei die Kranzelemente 3 gegen die Kolonnenwand 10 gepresst werden. Bei der zweiten Ausführungsform des Kranzelements 3 kann es nun geschehen, dass die untere Kante 333 bei der Stossstelle der Packungsabschnitte nicht vollständig in den Randspalt 12 hinausgedrängt wird. Dadurch entsteht eine kleine Lücke bei der Stossstelle, die sich störend auswirken kann. Das Auftreten einer solchen Lücke zwischen den Packungsabschnitten lässt sich mit den Ausführungsformen der Figuren 6 und 7 vermeiden.

Die Ausführungsform gemäss Fig.6 ist eine Variante des zweiten Ausführungsbeispiels, bei dem im unteren Bereich des Kranzelements 3 mindestens ein Teil 31a gestreckt gelassen wird (wobei hier die Einschnitte 331' bis zur Kante 333, 310 führen). Durch die untere Kante 310 dieses Teils 31a, der Teil der packungsberührenden Bereiche 31 ist, werden die tiefstliegenden Punkte des Kranzelements 3 gebildet. Da bei der Montage der Packung die Kante 333 dank des Teils 31a einen Abstand zum bereits eingebauten Packungsabschnitt erhält, tritt nun das beim zweiten Ausführungsbeispiel angetroffene Problem nicht mehr auf. Eine zweite Lösung dieses Problems ist durch das Kranzelement 3 der Fig.7 gegeben. Hier wird der benötigte Abstand der Kante 333 von dem darunterliegenden Packungsabschnitt mittels mindestens eines aufgeschweissten Streifens 31b (Schweisspunkte 42) hergestellt. Dieser Streifen 31b ist ebenfalls Teil der packungsberührenden Bereiche 31 und seine untere Kante 310 bildet die tiefstliegenden Punkte des Kranzelements 3.

Fig.8a zeigt das Querschnittsprofil des in Fig.4 dargestellten Kranzelements 3. Das freie Kranzelement 3 weist eine radiale Abmessung auf, die durch die Strecke a gegeben ist. Beim Einspannen in den Randspalt 12 wird diese Abmessung auf die Spaltbreite s verkleinert. Nach dem Einspannen besteht der Kontakt mit der Kolonnenwand ausser über die Kante 300 auch über die Scheitelpunkte 320 der noppenartigen Erhebungen 32. Die beiden Teile 13' und 31 sind über Schweissstellen 41 miteinander verbunden. Die Querschnittsprofile der Figuren 8b bis 8d sind den Ausführungsbeispielen der Figuren 5 bis 7 zugeordnet und benötigen keine ergänzenden Erläuterungen.

Die Figuren 8e und 8f zeigen weitere Varianten des zweiten Ausführungsbeispiels (Fig.5, Fig.8b), die sich jeweils durch eine bandförmige Verlängerung 31c bzw. 31d an der unteren Kantenlinie 333 ergeben. Im Fall der Fig.8f sind in der nach oben gerichteten Verlängerung 31d Durchbrüche 37 vorgesehen. Im Faltteil 33 sind keine Durchbrüche 36 eingezeichnet; damit ist jedoch lediglich eine Möglichkeit angegeben, und dies soll nicht bedeuten, dass solche Durchbrüche zu fehlen haben. Die Verlängerungen 31c bzw. 31d gehören auch zu den packungsberührenden Bereichen 31.

Das Kranzelement 3 der Fig.8g ist eine Variante des ersten Ausführungsbeispiels (Fig.4, Fig.8b), mit dem hauptsächlichen Unterschied, dass als Ersatz für die Noppen 32 lappenförmige Fortsätze 34 am unteren Rand des Teils 13' vorgesehen sind. Bei dem Kranzelement 3 der Fig.8h wird der Kontakt mit der Kolonnenwand nur über die überdachenden Teile 30 hergestellt. Es handelt sich wieder um eine ähnliche Struktur wie beim ersten Ausführungsbeispiel; jedoch lässt sich dieses Gebilde aus einem Bandstück durch Falzen um eine Linie 350 unterhalb der Durchbrüche 35 herstellen. Die Kante 300 ist im Mittenbereich des Kranzelements angeordnet, sodass praktisch kein Kippmoment auftritt und somit noppenartige Erhebungen wie beim ersten Ausführungsbeispiel nicht nötig sind.

Eine Stoffaustauschkolonne 1 mit erfindungsgemässen Kranzelementen 3 weist pro Packungsabschnitt jeweils mindestens einen über den Umfang geschlossenen Ring von Kranzelementen auf; der Ring kann auch aus lediglich einem Kranzelement bestehen. Die Kranzelemente werden vorteilhafterweise aus einem im wesentlichen gleichen Werkstoff wie die Packung hergestellt. Vorzugsweise besteht der Werkstoff der Packung bzw. der Kranzelemente aus einer metallischen Legierung. Die in den Figuren 1 und 2 dargestellte Packung ist lediglich als Beispiel zu verstehen. So kann die Packung eine beliebige Struktur aufweisen, die eine quer zur Falllinie gerichtete Verteilung der zu behandelnden Stoffe bewirkt. Die Kranzelemente werden wie die Packung mit Vorteil aus einem folienartigen Material hergestellt, dessen Wandstärke im Bereich zwischen 0,05 und 1 mm, vorzugsweise bei rund 0,2 mm liegt.

## Patentansprüche

1. Stoffleitendes Kranzelement (3) zu der Packung (2) einer Stoffaustauschkolonne (1), mittels welchem ein zwischen Packung und Kolonnenwand (10) liegender Ringspalt (12) mit lappenförmigen Teilen (30) weitgehend überdachbar ist, wobei diese überdachenden Teile (30), die jeweils eine mit der Kolonnenwand kontaktvermittelnde Kante (300) aufweisen, als radial nach innen abfallende Leitflächen ausgebildet sind, dadurch gekennzeichnet, dass das Kranzelement (3) ein separates Bauteil ist, dass flächenhaft ausgedehnte Bereiche (31) des Kranzelements zur Kontaktvermittlung mit der Packung (2) vorgesehen sind, dass die überdachenden Teile (30) mit den packungsberührenden Bereichen (31) in einer federelastischen Verbindung stehen und dass das Querschnittsprofil des Kranzelements eine radiale Abmessung (a) aufweist, die ein Fixieren des Kranzelements im Ringspalt (12) aufgrund von Feder- und Reibkräften ermöglicht.

2. Kranzelement nach Anspruch 1, hergestellt aus folienartigem Material, dessen Wandstärke im Bereich zwischen 0,05 und 1 mm, vorzugsweise bei rund 0,2 mm liegt.

3. Kranzelement nach Anspruch 1 oder 2, dadurch gekennzeichnet, dass zusätzlich zu den kontaktvermittelnden Kanten (300) der überdachenden Teile (30) eine zweite Menge von Kontaktpunkten (320) vorgesehen ist, durch die eine Kraftübertragung zwischen Kolonnenwand (10) und Kranzelement (3) herstellbar ist.

4. Kranzelement nach Anspruch 3, dadurch gekennzeichnet, dass die zweite Menge der Kontaktpunkte (320) durch noppenartige Erhebungen (32) gebildet wird.

5. Kranzelement nach Anspruch 3, dadurch gekennzeichnet, dass die zweite Menge der Kontaktpunkte durch mindestens eine Faltkante (330) gebildet wird.

6. Kranzelement nach einem der Ansprüche 1 bis 5, mit Durchbrüchen (35), die als Durchtrittsstellen für zur Packung zurückgeleitete Flüssigkeit vorgesehen sind.

7. Kranzelement nach einem der Ansprüche 1 bis 5, dadurch gekennzeichnet, dass die untere Begrenzung (310) der packungsberührenden Bereiche (31) die tiefstliegenden Punkte des Kranzelements (3) bilden.

8. Stoffaustauschkolonne (1) mit Kranzelementen (3) gemäss einem der Ansprüche 1 bis 7, wobei jeweils pro Packungsabschnitt mindestens ein über den Umfang geschlossener Ring von Kranzelementen vorgesehen ist.

9. Stoffaustauschkolonne nach Anspruch 8, dadurch gekennzeichnet, dass der Ring aus lediglich einem Kranzelement (3) besteht.

10. Stoffaustauschkolonne nach Anspruch 8 oder 9, dadurch gekennzeichnet, dass die Kranzelemente (3) im wesentlichen aus dem gleichen Werkstoff wie die Packung (2) hergestellt sind.

11. Stoffaustauschkolonne nach Anspruch 10, dadurch gekennzeichnet, dass der Werkstoff der Packung (2) bzw. der Kranzelemente (2) eine metallische Legierung ist.

## Claims

1. A crown element (3) for conducting matter to the packing (2) of a matter-exchange column (1), by means of which an annular gap (12) lying between the packing and the wall (10) of the column may largely be roofed over by parts (30) in the form of tabs, where these roofing-over parts (30) which exhibit in each case an edge (300) making contact with the column wall are made as guide areas descending inwards, characterized in that the crown element (3) is a separate component, that regions (31) of the crown element extended areally are provided for making contact with the packing (2), that the roofing-over parts (30) are connected with springy elasticity to the regions (31) touching the packing and that the profile of the cross-section of the crown element exhibits a radial dimension (a) which enables fixing of the crown element in the annular gap (12) because of spring and frictional forces.

2. A crown element as in Claim 1, produced from foillike material of which the wall thickness lies in the range beteen 0.05 and 1 mm, preferably at around 0.2 mm.

3. A crown element as in Claim 1 or 2, characterized in that in addition to the contact-making edges (300) of the roofing-over parts (30) a second group of points (320) of contact is provided, through which a transmission of force may be produced between the column wall (10) and the crown element (3).

4. A crown element as in Claim 3, characterized in that the second group of points (320) of contact is formed by knoblike elevations.

5. A crown element as in Claim 3, characterized in that the second group of points of contact is formed by at least one edge (330) at a fold.

6. A crown element as in one of the Claims 1 to 5, having openings (35) which are provided as places for liquid led back to the packing to pass through.

7. A crown element as in one of the Claims 1 to 5, characterized in that the lower boundary (310) of the regions (31) touching the packing form the lowest-lying points on the crown element.

8. A matter-exchange column (1) having crown elements (3) in accordance with one of the Claims 1 to 7, in which at least one ring of crown elements closed over the circumference is provided for every portion of packing.

9. A matter-exchange column as in Claim 8, characterized in that the ring consists of merely one crown element.

10. A matter-exchange column as in Claim 8 or 9, characterized in that the crown elements (3) are produced from essentially the same material as the packing (2).

11. A matter-exchange column as in Claim 10, characterized in that the material of the packing (2) or of the crown elements (2) is a metal alloy.

## Revendications

1. Elément en couronne (3) de guidage de matière vers le garnissage (2) d'une colonne (1) d'échange de matières, qui permet de couvrir pratiquement un intervalle annulaire (12) situé entre le garnissage et la paroi (10) de la colonne par des éléments en forme de languettes (30), ces éléments couvrants (30), dont chacun comprend un bord (300) qui établit le contact avec la paroi de la colonne, étant réalisés sous forme de surfaces de guidage en pente vers le bas radialement vers l'intérieur, caractérisé en ce que l'élément en couronne (3) est un composant séparé, en ce que des zones (31) de l'élément en couronne qui présentent une étendue de surface sont prévues pour l'établissement du contact avec le garnissage (2), en ce que les éléments couvrants (30) sont reliés avec élasticité aux zones (31) en contact avec le garnissage et en ce que le profil en coupe transversale de l'élément en couronne a une dimension radiale (a) qui permet une fixation de l'élément en couronne dans l'intervalle annulaire (12) par des forces d'élasticité et de frottement.

2. Elément en couronne selon la revendication 1, réalisé en matériau en forme de feuillard dont l'épaisseur de la paroi est dans une plage comprise entre 0,05 et 1 mm et de préférence est d'environ 0,2 mm.

3. Elément en couronne selon la revendication 1 ou 2, caractérisé en ce qu'en plus du bord (300) des éléments couvrants (30) établissant le contact, une seconde quantité de points de contact (320), par lesquels une transmission de force entre paroi (10) de la colonne et élément en couronne (3) est produite, est prévue.

4. Elément en couronne selon la revendication 3, caractérisé en ce que la seconde quantité de points de contact (320) est formée de bossages (32) en forme de boutons.

5. Elément en couronne selon la revendication 3, caractérisé en ce que la seconde quantité de points de contact est formée par au moins une arête de repliage (330).

6. Elément en couronne selon l'une des revendications 1 à 5, comportant des trous (35) qui sont prévus pour former des lieux de passage du liquide ramené dans le garnissage.

7. Elément en couronne selon l'une des revendications 1 à 5, caractérisé en ce que le bord inférieur (310) des zones (31) en contact avec le garnissage forme les points les plus bas de l'élément en couronne (3).

8. Colonne d'échange de matières (1) comprenant des éléments en couronne (3) selon l'une des revendications 1 à 7, au moins un anneau d'éléments en couronne qui est fermé à la circonférence étant prévu pour chaque section de garnissage.

9. Colonne d'échange de matières selon la revendication 8, caractérisée en ce que l'anneau consiste en un unique élément en couronne (3).

10. Colonne d'échange de matières selon la revendication 8 ou 9, caractérisée en ce que les éléments en couronne (3) sont réalisés sensiblement en le même matériau que le garnissage (2).

11. Colonne d'échange de matières selon la revendication 10, caractérisée en ce que le matériau du garnissage (2) et des éléments en couronne (3) est un alliage métallique.
